# EUROPEAN PATENT APPLICATION

(11) **EP 1 993 289 A1**
(43) Date of publication of application: **19.11.2008**
(21) Application number: 07009868.6
(22) Date of filing: 16.05.2007
(51) Int. Cl.: H04N 7/24, H04N 5/00, H04N 7/173

(54) **System having improved switching times between broadcast/multicast bearers**

(71) Applicant: Nokia Siemens Networks Oy, 02610 Espoo (FI)
(72) Inventor: Fizzotti, Alessandro, 80802 München (DE)
(74) Representative: Bruglachner, Thomas E.

(57) **Abstract**

It is described a transmitter (106) and a receiver (103) for transmitting a data stream (108). By beginning transmission of a data stream (108) via a unicast connection (101) until this data stream is received via a non-unicast connection (105, 205), e.g. a broadcast connection or a multicast connection, the time period between a request for transmission of a data stream (108) and the beginning of the processing of the data stream (108), and hence the time period for switching between channels, can be considerably reduced.

## Description

### Field of invention

The present invention relates to the field of transmitting data streams in particular to the field of transmitting data streams which comprise first and second data portions wherein the first data portions are necessary to process the data stream.

### Art Background

Data streams and data transmission protocols sometimes contain different categories of data portions. For example, a data stream may contain first data portions and second data portions wherein at least one of the first data portions is necessary for processing the data stream. An example of such a data stream is a multimedia data stream which contains reference frames, i.e. pictures which are coded without reference to any pictures except themselves, and predicted frames which require the prior decoding of at least one key-frame other picture(s) in order to be decoded. Examples of such data streams are MPEG-2, H.263 and H.264 data streams. In the following, the key-frames are denoted as I-frames and the predicted frames are denoted as P-frames.

While data streams containing I-frames and P-frames usually provide a high compression ratio, i.e. the coded data stream containing the I-frames and the P-frames requires far less storage capacity compared to an uncoded data stream, these data streams have the disadvantage that a receiver must receive an I-frame until processing of the received data stream may commence.

Multimedia data streams are typically provided via a broadcast or multicast connection wherein one transmitter provides a data stream to multiple receivers. Broadcast and Multicast connections save bandwidth since the transmitter requires the bandwidth only once, independently from the number of receivers.

There may be a need for a data transmission system which overcomes at least one of the disadvantages mentioned above.

### Summary of the Invention

This need may be met by the subject matter according to the independent claims. Advantageous embodiments of the present invention are described by the dependent claims.

According to a first aspect of the invention there is provided a method of transmitting data of a data stream. The method comprises receiving a request for transmission of data of a data stream to a receiver wherein the data stream comprises first data portions and second data portions and at least one of the first data portions is necessary for processing the data stream. In response to the request, data of the data stream are transmitted to the receiver via a non-unicast connection and further data of the data stream are transmitted to the receiver via a unicast connection so as to reduce a average receiving time between the reception of the request for transmission and a transmission of one of the first data portions.

This aspect of the invention is based on the idea that by reducing an average receiving time between the reception of the request for transmission and a transmission of one of the first data portions can be reduced by transmitting data of the data stream of interest via a unicast connection. As a result processable data are provided earlier and the time interval between the request for transmission of the data and the processing of the received data by the receiver can be decreased.

According to an embodiment, the unicast transmission is actively used for transmission only for the duration of time that a first data portion of the target channel is received via the broadcast channel. After the receiver has first data portions from the broadcast transmission, the unicast channel is not used anymore.

According to an embodiment, the first data portions are necessary to process the second data portions. According to still another embodiment, each first data portion has associated therewith a second data portion, wherein the second data portion can only be processed with the respective first data portion.

According to an embodiment, the non-unicast connection is a broadcast connection. According to other embodiments the non-unicast connection is a multicast connection. According to a still further embodiment, the term "non-unicast connection" is synonymous for "at least one of a broadcast connection and a multicast connection".

Herein, "unicast connection", "broadcast connection" and "multicast connection" are used in accordance with general practice, i.e. "unicast connection" includes any arbitrary point-to-point connection. "Multicast connection" includes any connection of a transmitter with a predetermined group of receivers within a network. "Broadcast connection" includes any connection of a transmitter with any receiver within a network.

A "unicast connection" and a "non-unicast connection" as described herein may be a wired connection or a wireless connection. According to illustrative embodiments, a "unicast connection" and a "non-unicast connection" may be a short-range connection of an in-house network, e.g. a local network. For example, the transmitter may be home streaming server for multimedia applications. According to other embodiments, the "unicast connection" and a "non-unicast connection" may be a long-range connection via a telephone network and/or internet, e.g. a global connection.

According to an embodiment, the data stream is a multimedia data stream which contains key-frames (I-frames) and predicted frames (P-frames).

According to a further embodiment of the invention the transmission of data of the data stream via the unicast connection starts with the one of the first data portions. According to other embodiments, the transmission of data starts with second data portions which are followed by a first data portion. This may be advantageous at least as long as the average receiving time between the reception of the request for transmission and a transmission of one of the first data portions is reduced compared to transmission of data of the data stream only via the non-unicast connection.

According to still another embodiment of the invention, the data transmitted via the unicast connection is transmitted with a time shift with regard to the data transmitted via the non-unicast connection. Thereby the average receiving time between the reception of the request for transmission and a transmission of one of the first data portions is reduced.

According to still another embodiment of the invention, the method according to the first aspect further comprises buffering the data stream for a time period lager than a time period between two first data portions in the data stream.

According to a second aspect of the invention, a computer program product which enables a processor to carry out the method according to the first aspect of the invention or an embodiment thereof.

According to a third aspect of the invention, a method of receiving data is provided which comprises receiving data of a data stream via a unicast connection, wherein the data stream comprises first data portions and second data portions and at least one of the first data portions is necessary for processing the data stream and receiving data of the data stream via a non-unicast connection.

This aspect of the invention enables receiving data of a data stream transmitted in accordance with a method of the first aspect of the invention or an embodiment thereof.

According to an embodiment, the data received via the unicast connection are initially used for processing the data of the data stream and the data received via the non-unicast connection are used for processing if these data overlap with the data received via the unicast connection. This embodiment provides for a continuous switching from processing data received via the unicast connection to processing data received via the non-unicast connection.

According to a fourth aspect of the invention, a computer program product is provided which enables a processor to carry out the method according to the third aspect of the invention or an embodiment thereof.

According to a fifth aspect of the invention, a data transmitter comprises a transmitter buffer for buffering data of a data stream to be transmitted to a plurality of receivers and a unicast connection interface operationally connected to the transmitter buffer. The data transmitter further comprises a buffer manager for effecting transmission of data of the data stream to at least one of the receivers via the unicast connection interface and
a non-unicast connection interface for transmitting the data stream via a non-unicast connection.

According to an embodiment of the invention, a data transmitter is provided wherein the buffer manager is configured for accessing data in the transmitter buffer. Further, the data stream comprises first data portions and second data portions and at least one of the first data portions is necessary for processing the data stream and
the buffer manager is configured for beginning transmission of the data via the unicast connection interface with one of the first data portions of the data stream.

According to a sixth aspect of the invention, a data receiver for receiving data of a data stream is provided which comprises a unicast connection interface for receiving data of the data stream via a unicast connection and a non-unicast connection interface for receiving data of the data stream via a non-unicast connection.

A data receiver of this kind is capable of receiving data of a data stream transmitted in accordance with the first aspect of the invention.

According to an embodiment of the invention, a data receiver is provided which further comprises a receiver buffer for buffering data of the data stream and
a buffer manager providing the data received via the non-unicast connection for processing if the these data overlap with the data received via the unicast connection. This embodiment provides for a continuous switching from processing data received via the unicast connection to processing data received via the non-unicast connection.

According to a seventh aspect of the invention, a data transmission system is provided comprising a data transmitter according to the fifth aspect of the invention or an embodiment thereof and a data receiver according to the sixth aspect of the invention or an embodiment thereof.

In the following there will be described exemplary embodiments of the present invention with reference to transmitters and receivers for multimedia data and respective methods for operating the same. It has to be pointed out that of course any combination of features relating to different subject matters is also possible.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows schematically a system for transmitting multimedia data in accordance with embodiments of the present invention;
Figure 2 schematically shows a sequence diagram of a system for transmitting multimedia data in accordance with embodiments of the present invention.

### Detailed Description

The illustration in the drawings is schematic. It is noted that in different figures, similar or identical elements are provided with the same reference signs or with reference signs, which are different from the corresponding reference signs only within the first digit.

Conventional systems which broadcast a data stream containing first data portions and second data portions of which at least one of the first data portions is necessary to process the data stream in the receiving device have several disadvantages. For example in conventional broadcasting systems like Digital Video Broadcasting - Terrestrial (DVB-T), Digital Video Broadcasting - Handheld (DVB-H), Multimedia Broadcast Multicast Service (MBMS), etc., a request of transmission of data of the desired data stream requires a certain waiting time for the receiver to obtain a first data portion, e.g. an I-frame of the audio/video (A/V) stream. An example of such a request of data transmission is a switch indication indicating a desired switch of A/V channel. In the above mentioned broadcasting systems (DVB-T, DVB-H, MBMS), this switching time can be between 3 and 10 seconds. This time is made up of the time taken to connect with the bearer of the new channel and the time that the receiver, e.g. a video player, must wait until it receives the next reference frame (I-frame) in the video stream. A video stream of this type may be e.g. a H.263 or a H.264 coded video stream.

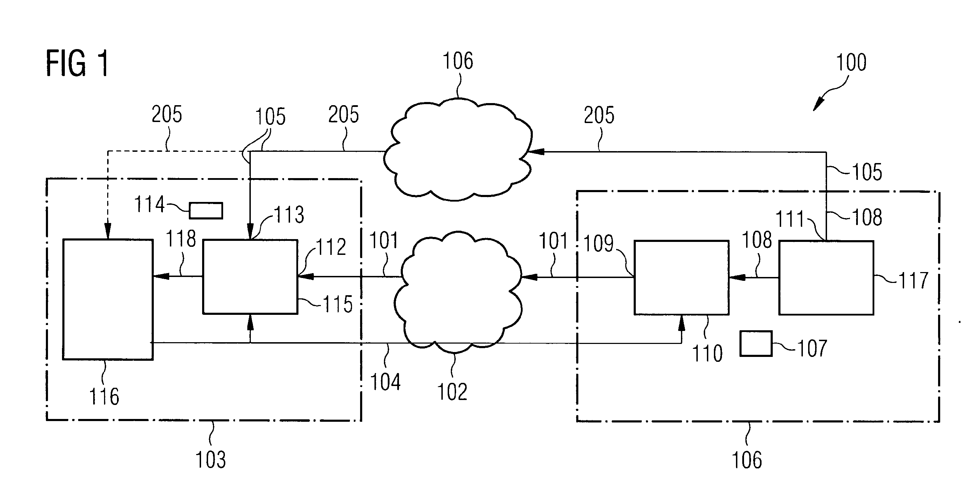

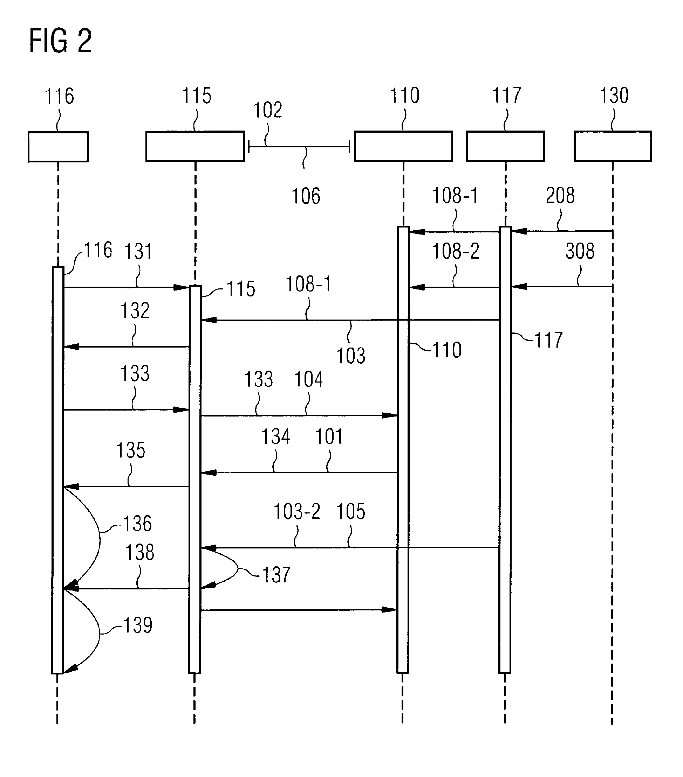

An embodiment of the present invention illustrated in the drawings Fig. 1 and Fig. 2 by way of a system 100, provides a solution to the above mentioned problem. This solution is based on using an existing pre-configured point-to-point unicast connection 101 between the unicast network 102 and the receiver 103, e.g. a mobile device client, to bridge the time between the subscriber's switch command 104 and when the new target broadcast channel is available for viewing. This time includes the waiting time for the reception of the reference frame (I-frame). Accordingly, while the device 103 is waiting for the target broadcast channel over a broadcast connection 105, it can receive and display content which is received via the unicast connection 101. In Fig. 1, the unicast network which includes the unicast connection 101 is denoted by 102 and the broadcast network which includes the broadcast connection 105 is denoted by 106. By transmitting data of the data stream to the receiver via a unicast connection, an average receiving time between the reception of the request for transmission and a transmission of one of the first data portions is reduced.

The system 100 in Fig. 1 includes a data transmitter 106. The data transmitter 106 comprises a transmitter buffer 107 for buffering data of a data stream 108 to be transmitted to a plurality of receivers 103, one of which is shown in Fig. 1. A unicast connection interface 109 is operationally connected to the transmitter buffer 107. The data transmitter 106 includes a buffer manager 110 for effecting transmission of data of the data stream 108 to at least one of the receivers 103 via the unicast connection interface 109.

According to an embodiment, the buffer manager 110 is configured to buffer the data stream 108 for a time period lager than a time period between two first data portions in the data stream 108. For example, the buffer manager 110 buffers the data stream for a time period that is twice as long as the typical period between two first data portions in the data stream 108.

The buffer manager 110 may effect transmission of data via the unicast connection interface 9 upon a request 104, e.g. when starting transmission, upon channel switch request, etc. The data transmitter 106 further comprises a non-unicast connection interface 111, e.g. a broadcast connection interface, for transmitting the data stream 108 via the non-unicast connection 105.

The buffer manager 110 of the transmitter 106 is configured for accessing data in the transmitter buffer 107. According to an embodiment, the buffer manager 107 is configured for beginning transmission of the data via the unicast connection interface 109 with one of the first data portions of the data stream.

According to an embodiment the transmitter 106 may comprise a streaming server 117 for providing the data stream 108. According to another embodiment, the streaming server 117 is an A/V streaming platform.

The system 100 in Fig. 1 further includes the data receiver 103 for receiving data of the data stream 108 transmitted by the transmitter 106 via the unicast connection 101 or via the non-unicast connection 105. According to the illustrated embodiment, the receiver 103 comprises a unicast connection interface 112 for receiving data of the data stream 108 via the unicast connection 101. Further, each receiver 103 comprises a non-unicast connection interface 113 for receiving data of the data stream 108 via the non-unicast connection 105.

Further according to the illustrated embodiment, the data receiver 103 comprises a receiver buffer 114 for buffering data of the data stream 108 and a buffer manager 115 configured for providing the data received via the non-unicast connection 105 for processing if the these data overlap with the data received via the unicast connection 101. Overlapping of the data means that e.g. for a packet-based connection the same packet is available from both the unicast connection and the non-unicast connection.

The receiver buffer manager 115 may be configured to buffer the data received via the unicast connection for a predetermined period of time. According to another embodiment, the receiver buffer manager 115 is configured to buffer the data received via the unicast connection 101 as long as the buffered data overlap with the data received via the non-unicast connection 105.

According to an embodiment, the data receiver 103 comprises a client 116 for processing the received data. According to another embodiment, the client 116 is an A/V client. According to still another embodiment, the client 116 is an A/V client of a mobile device 103.

According to an embodiment, the receiver buffer manager 115 transmits a continuous stream of data 118 of the data stream 108 to the client 116, irrespective whether the data 118 are have been received via the unicast connection 101 or via the non-unicast connection 105.

According to other embodiments, the client 116 may be adapted to established a non-unicast connection with the transmitter 106 in order to directly receive data of the data stream 108 via the non-unicast connection 205. In this embodiment, the client 116 may be configured use either the unicast data 118 received from the buffer manager 115 or to use the non-unicast data received via the non-unicast connection 205.n

It should be understood that the request 104 for transmittance of data may be provided by the client 116 to both, the buffer manager 115 of the receiver 103 as well as to the buffer manager 110 of the transmitter 106, as illustrated in Fig. 1. According to other embodiments, the request 104 may be transmitted to only one of the buffer managers 110, 115. Further, any other components of the receiver 103 and/or the transmitter 106 may be additionally or alternatively involved in the transmission of the request 104.

Fig. 2 shows a sequence diagram of a data transmission system according to an embodiment of the invention. Corresponding elements of Fig. 1 and Fig. 2 are denoted by the same reference numbers and the description of these elements is not repeated with regard to Fig. 2.

According to an embodiment of the invention, as illustrated exemplarily in Fig. 2, a live data source 130 provides a first data stream 208 (channel 1) and a second continuous live stream 308 (channel 2) to the broadcast server 117. The first data stream 208 may be a first continuous live stream and the second data stream 308 may be a second continuous live stream. The broadcast server 117 forwards the data streams 208, 308 to the server buffer manager 110. Each of the data streams 208, 308 comprises first data portions and second data portions wherein at least one of the first data portions is necessary for processing the respective data stream 208, 308.

The exemplary sequence in Fig. 2 starts with as streaming request 131 of the client 116, requesting streaming of channel 1, i.e. streaming of data of the first data stream 208. The streaming server 117 transmits data of the first data stream 208 to the receiver buffer manager (client buffer manager) 115. The receiver buffer manager 115 provides the data of the first data stream 208 to the client 116, indicated at 132.

A request 133 for switching to channel 2, i.e. to data of the second continuous live stream 308 is provided by the client 116 to the receiver buffer manager 115. Such a request 133 of a channel switch may be initiated by a respective user operation. The request for channel 2 data, i.e. for data of the second continuous live stream 308 is forwarded by the receiver buffer manager 115 to the server buffer manager 110. In response hereto, the server buffer manager 110 immediately starts a unicast transmission 134 of data of the second continuous live stream 308 via the unicast connection 101, starting with an I-frame. The unicast transmission 134 can start immediately without any time consuming Real time streaming protocol (RTSP) transmissions, since the A/V session data for the target channel, i.e. for the second channel is already known at the client device. According to the illustrated embodiment, the destination port for the unicast communication is statically configured and does not need to be negotiated. According to other embodiments, the destination port is dynamically configured. According to an embodiment of the dynamical destination port configuration, the configuration of the destination port is done only once at the beginning of the overall data transmission session, so that at switching time, no time is lost in doing client/server port negotiation.

The receiver buffer manager receives the A/V data of the second data stream 308 via the unicast connection 101 and forwards it to the client 116, indicated at 135. The client 116 can start displaying the content to the subscriber as soon as a minimum amount of data has been received. Typically a minimum of 0.5 seconds of data are necessary. Since the transmission was started with a reference frame (I-frame), the client can immediately start displaying the target's channel content, i.e. the content of the second data stream 308, indicated at 136 in the illustrated embodiment shown in Fig. 2. The minimum buffering time is just there in case the unicast network has jitter. By buffering a bit of data, this can be compensated. The minimum amount of buffering data is dependent on the unicast network's quality of service settings. If the transmission Jitter is very high, a larger buffer (which decreases oerall switching performance) might be required.

With the embodiments of the invention illustrated in Fig. 1 and Fig. 2, a total switching time for switching channels is typically about one second or less. Contribution to this time is the time for transmitting the switching indication request, e.g. for a UMTS network 200 ms. The transmission time for transmitting the first I-frame from the transmitter 106 to the receiver 103 is typically 200 ms. Further, the minimal buffering time is approximately 0.5 seconds.

Therefore, the illustrated embodiments of the invention provide a considerable improvement compared to conventional systems which require an average switching time of 6 seconds to 10 seconds. Contributions to this conventional switching time is the bearer switching time of 4 seconds to 8 seconds and an A/V I-frame synchronization time (average assuming an I-frame time period of 4 seconds)of about 2 seconds.

Selecting a start frame, i.e. selecting an I-frame as a start frame for the unicast data transmission, leads to a time shift between the data transmitted via the unicast connection 101 and the data transmitted via the non-unicast connection 105.

After a certain amount of time, the target broadcast channel connection is available and the device 103, i.e. the receiver buffer manager 115 in the illustrated embodiment, starts receiving A/V data of the second data stream 308 over the non-unicast connection 105. Usually the first received frame packets will be intermediate frame packets (P-frames) that cannot be displayed immediately. According to an embodiment of the invention, all the data received via the broadcast connection 105 is buffered.
Receiving and buffering of the data of the second data stream 308 via the non-unicast connection 105 continues for a certain waiting time 137, until the packets received via the unicast connection 101 start overlapping with the packets received via the non-unicast connection 105, i.e. until the same data packet is available from both the unicast connection 101 and the non-unicast connection 105. Once the data packets of the second data stream 308 overlap, it is possible to seamlessly switch to the data being received via the non-unicast connection 105. This means that the receiver buffer manager 115 transmits to the client 116 data 138 of the second data stream 308 received via the non-unicast connection 105. In response hereto, the client 116 displays the data of the second data stream 308 received via the non-unicast connection 105, indicated at 139.

In the embodiment illustrated in Fig. 2, the switching from the unicast data to the non-unicast data is performed by the receiver buffer manager 115. This has the advantage that the client 116 is not involved in the switching between the unicast data and the non-unicast data. Hence in this case, the client 116 may be any existing client for processing data of the data stream 108, 208, 308, e.g. any existing A/V client 116 for displaying A/V data.

As mentioned with regard to Fig. 1, according to other embodiments the non-unicast data is received by the client 116 and the switching from the unicast data to the non-unicast data is performed by the client 116.

After the client 116 displays the data of the second data stream 308 received via the non-unicast connection 105, the server side buffer manager can then stop sending data of the desired data stream 308 to the specific client 106. To this end, the receiver buffer manager 115 may transmit a respective end signal to the server side buffer manager 110. The server side buffer manager 110 can then start serving new switching requests from other clients or from the same client 116.

According to embodiments of the invention, any component or any of the transmission system 100, e.g. the client 116, the buffer managers 110, 115 and the streaming server 117 a provided in the form of respective computer program products which enable a processor to provide the functionality of the respective elements as disclosed herein. According to other embodiments, any component of the transmission system 100, e.g. the client 116, the buffer managers 110, 115 and the streaming server 117 may be provided in hardware. According to other - mixed - embodiments, some components may be provided in software while other components are provided in hardware.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:

By beginning transmission of a data stream via a unicast connection until this data stream is received via a non-unicast connection, e.g. a broadcast connection or a multicast connection, the time period between a request for transmission of a data stream and the beginning of the processing of the data stream, and hence the time period for switching between channels, can be considerably reduced.

In particular the system 100 shown in Fig. 1 might be obtained by introducing a dedicated buffer manager component between an existing mobile TV solution (e.g. DVB-H, MBMS) and the mobile device's player client.

Generally, digital/IP-TV settop boxes may also benefit from the invention and its embodiments.

### List of reference signs:

- 100: transmission system
- 101: unicast connection
- 102: unicast network
- 103: receiver
- 104: switch command
- 105: broadcast connection
- 106: data transmission
- 107: transmitter buffer
- 108: data stream
- 109: unicast connection interface
- 110: buffer manager
- 111: non unicast connection interface
- 112: unicast connection interface
- 113: non-unicast connection interface
- 114: receiver buffer
- 115: buffer manager
- 116: client
- 117: streaming server
- 118: data stream
- 130: data source
- 131: first data stream
- 132: second data stream
- 133: request for switching to second data stream
- 134: unicast transmission
- 135: data stream
- 136: display content of second data stream received via unicast connection
- 137: waiting time; receiving and buffering unicast data of the second data stream
- 138: data of the second data stream received via non-unicast connection
- 139: display content of second data stream received via non-unicast connection
- 205: non-unicast connection
- 208: first data stream
- 308: second data stream

## Claims

1. A method of operating a data transmitter (106), the method comprising:
- receiving a request (104) for transmission of data of a data stream (108, 208, 308) to a receiver (103), wherein the data stream (108, 208, 308) comprises first data portions and second data portions and at least one of said first data portions is necessary for processing said data stream; and, in response to said request (104),
- transmitting data of said data stream (108, 208, 308) to said receiver (103) via a unicast connection so as to reduce an average receiving time between said reception of said request (104) for transmission and a transmission of one of said first data portions; and
- transmitting data of said data stream (108, 208, 308) to said receiver (103) via a non-unicast connection (105, 205) .

2. The method according to claim 1, wherein:
- said transmission of data of said data stream (108, 208, 308) via said unicast connection (101) starts with said one of said first data portions.

3. The method according to claim 1, wherein:
- said data transmitted via said unicast connection (101) is transmitted with a time shift with regard to said data transmitted via said non-unicast connection (105, 205).

4. The method according to claim 1, further comprising:
- buffering said data stream (108, 208, 308) for a time period lager than a time period between two first data portions.

5. Computer program product which enables a processor to carry out the method according to claim 1.

6. A method of operating a data receiver (103), the method comprising:
- receiving data of a data stream (108, 208, 308) provided by a data transmitter (106) via a unicast connection (101), wherein the data stream (108, 208, 308) comprises first data portions and second data portions and at least one of said first data portions is necessary for processing said data stream; and
- receiving data of said data stream (108, 208, 308) via a non-unicast connection (101).

7. The method of claim 6, wherein:
- said data received via said unicast connection (101) are initially used for processing of said data; and
- said data received via said non-unicast connection (105, 205) are used for processing if the these data overlap with the data received via said unicast connection (101).

8. Computer program product which enables a processor to carry out the method according to claim 6.

9. Data transmitter comprising:
- a transmitter buffer (107) for buffering data of a data stream (108, 208, 308) to be transmitted to a plurality of receivers (103);
- a unicast connection interface (109);
- a buffer manager (110) for effecting transmission of data from said transmitter buffer (117) to at least one of said receivers (103) via said unicast connection interface (109); and
- a non-unicast connection interface (111) for transmitting said data stream (108, 208, 308) to said plurality of receivers (103) via a non-unicast connection (105, 205).

10. Data transmitter according to claim 9, wherein:
- said data stream (108, 208, 308) comprises first data portions and second data portions, wherein the at least one of said first data portions is necessary for processing said data stream; and
- said buffer manager (110) is configured for beginning transmission of said data via said unicast connection interface (111) with one of said first data portions of said data stream.

11. Data receiver for receiving data of a data stream, comprising
- a unicast connection interface (112) configured for receiving data of said data stream (108, 208, 308) via a unicast connection (101);
- a non-unicast connection interface (113) configured for receiving data of said data stream (108, 208, 308) via a non-unicast connection (105, 205).

12. Data receiver according to claim 11, further comprising:
- a receiver buffer (114) for buffering data of said data stream (108, 208, 308) received via said unicast connection; and
- a buffer manager (115) configured for providing said data received via said non-unicast connection (105, 205) for processing if the these data overlap with the data received via said unicast connection (101).

13. Data transmission system (100) comprising a data transmitter (106) according to claim 9 and a data receiver (103) according to claim 11.
